(19) Europäisches Patentamt
European Patent Office
Office européen des brevets

(11) EP 0 773 301 B1

(12) **EUROPEAN PATENT SPECIFICATION**

(45) Date of publication and mention
of the grant of the patent:
**01.12.1999 Bulletin 1999/48**

(21) Application number: **96909176.8**

(22) Date of filing: **10.04.1996**

(51) Int Cl.6: **C22B 7/02**, C22B 19/28,
C22B 3/12

(86) International application number:
**PCT/ES96/00080**

(87) International publication number:
**WO 96/32512 (17.10.1996 Gazette 1996/46)**

(54) **HYDROMETALLURGICAL TREATMENT FOR THE PURIFICATION OF WAELZ OXIDES THROUGH LIXIVIATION WITH SODIUM CARBONATE**

HYDROMETALLURGISCHES VERFAHREN ZUR REINIGUNG VON WAELZ OXYDEN DURCH LAUGUNG MIT NATRIUMCARBONAT

PROCEDE DE TRAITEMENT HYDROMETALLURGIQUE POUR LA DEPURATION D'OXYDES DE WAELZ PAR LIXIVIATION AVEC DU CARBONATE DE SODIUM

(84) Designated Contracting States:
**DE FR GB IT SE**

(30) Priority: **10.04.1995 ES 9500713**

(43) Date of publication of application:
**14.05.1997 Bulletin 1997/20**

(73) Proprietor: **Compania Industrial Asua-Erandio, S.A.(Aser S.A.)**
**48950 Asua-Erandio (ES)**

(72) Inventors:
• **DANOBEITIA SIERRA, Iker**
**E-48950 Asua-Erandio (ES)**

• **VALLEJO OCHOA DE ALDA, Javier**
**E-48950 Asua-Erandio (ES)**
• **GOICOECHEA GANDIAGA, Nestor**
**E-48950 Asua-Erandio (ES)**

(74) Representative: **Perez Bonal, Bernardo**
**Explanada 8**
**28040 Madrid (ES)**

(56) References cited:
**DE-A- 4 033 232          ES-B- 2 038 917**

• **PATENT ABSTRACTS OF JAPAN vol. 013, no. 145 (C-583), 10 Abril 1989 & JP 63 307116 A (SUMITOMO METAL IND LTD;OTHERS: 01), 14 Diciembre 1988,**

**Description**

The present invention relates to a process for the hydrometallurgic treatment of zinc oxide-containing material (waelz oxides), with a final yield and total elimination of the contaminants found in the zinc oxide-containing material, above, generally, 95 %.

By the use of the process of the present invention, a purified zinc oxide-containing material is produced with a very low content in mainly alkalines, halogens and sulfur, such that it enables its use in electrochemical processes.

**BACKGROUND TO THE INVENTION**

Traditionally, steel was produced in blast furnaces by feeding them with iron ore and metallurgic coke as reducer. As time went by, the amount of discarded steel scrap reached such dimensions that it began to be reused to produce steel again, hence not having to depend exclusively upon iron ore.

This is how the binomial electric furnace - scrap began to be used in the production of steel.

During the treatment of scrap in the electric furnace, solid particulates (some 10 - 20 Kg/ Ton. of steel produced), known as steelworks dust or Electric Arc Furnace Dust (EAFD), are emitted, which are collected during gas cleaning.

This steelworks dust is basicaly constituted by metallic oxides of variable composition, making its treatment a necessity in order to remove the problem of its storage, caused by its low - medium content of zinc and lead as main metallic species, and variable contents of other metals, some of which are considered hazardous, such as Cd or Cr. Steelworks dust is classified as a hazardous waste due to the leacheates which solubilize its heavy metals.

Zinc contained in steelworks dust approaches 25 %, being principally found in the form of oxide or ferrite. Maximum recovery of this zinc will be achieved by the process which manages to destroy the ferrites, liberating from them the zinc held within. This is basicaly achieved by means of the pyrometallurgic processes considered as the best available technology for the treatment of steelworks dust.

In industrial practice, steelworks dusts are treated my means of several pyrometallurgic processes, out of which, perhaps, the most suitable and widely used, is the Waelz Process, there being others, such as the Contop Process of hydrocyclone smelting, the flame cyclone process, the plasma fusion process, the direct reduction process, etc..

In the waelz process, steelworks dusts are introduced, together with coke, as fuel and as reducing agent, and with siliceous sand as slag enhancer, in a rotating furnace, where the metals of interest (Zn, Pb, Cd) are reduced to their metallic state, sublime into the free atmosphere of the furnace and are finally reoxidized with an air current, obtaining an impure oxide with typical contents of about 54% Zn, 9% Pb and 0.25% Cd, aside other impurities.

These impure oxides are called waelz oxide, characterized in that the content of zinc and lead is high, that of iron having decreased significantly in comparison with that of steelworks dust.

Unfortunately, the presence of certain elements, specially halogens, alkalines and sulfur, forbid their use in electrochemical processes and restrict their field of use to Imperial Smelting furnaces

Consequently, by means of the present invention as claimed in claim 1 a purified zinc oxide-containing material is produced for use in Imperial Smelting furnaces and usable in electrochemical processes.

**DESCRIPTION OF THE INVENTION**

The object of the present invention relates to a process for the obtention of a purified zinc oxide-containing material improved for its use in Imperial Smelting furnaces and usable also in electrochemical processes.

This process presents the following advantages :

-    It finishes in a product with no contamination from mainly alkalines, halogens and sulfur.
-    Absence of polluting substances.
-    Reduced investment.
-    Low operating costs.

Getting into the fundamental contents of this patent, it is important to note in the first place that, the starting material is waelz oxide or any impure oxide of zinc, obtained by natural means or by diverse processes.

To serve as an indication, the typical grade of these waelz oxides is the following :

| Zn | 54 % |
|----|------|
| Pb | 9 %  |

(continued)

| Cd | 0.25 % |
|----|--------|
| Cl | 4 % |
| Na | 1.5 % |
| K | 2 % |
| S | 1 % |
| F | 0.4 % |

being it possible for these grades to depart from the values given.

The single figure shows the outline of the stages which are described below :

These oxides, from here on called waelz oxides, are subjected to a leaching process with water and sodium carbonate at a constant temperature and alkaline pH, until a constant pH is achieved without the addition of any extra sodium carbonate. The number of steps and the leaching time must be the necessary to obtain the maximum removal of contaminating elements.

Leaching will be carried out at a temperature between aproximately 50 ºC and 90 ºC, being 65 - 75 ºC an optimum temperature, achieving a shorter leaching time and stimulating the transformation of insoluble halogens into soluble halogens.

The pH must be kept between 8.0 and 10.0 during the leaching process, being $9.0 \pm 0.2$ an optimum working pH. Sodium carbonate consumption will depend upon the nature of the starting material, with typical values of 60-140 g/Kg. of solid starting material.

The initial waelz oxide / solution ratio may vary between 100 and 500 g of waelz oxide per liter of solution, being 200 - 300 g/L an optimum value.

In this leaching process, saturated with carbonate by the addition of solid $Na_2CO_3$, double decomposition of the salt is favoured, and the presence of all the anions is assured in the alkaline liquid, even of those that can form quite insoluble precipitates in the alkaline conditions created by the hydrolisis of sodium carbonate, but has the drawback that an excessive rise in pH would solubilize most of the amphoteric oxides ($Al(OH)_3$, $Sb(OH)_3$, etc.) which may have precipitated, or that the large quantity of sodium salts could give rise to the, at least partial, formation of double and soluble carbonates of the cation and sodium, as could be those of lead, copper, nickel, mercury and magnesium. On the contrary, too weak a carbonate concentration in the solution would leave back some precipitated anions and would solubilize some cations of interest.

Aqueous solutions of $Na_2CO_3$ undergo strong hydrolisis because they are a strong salt of the weak carbonic acid. The $CO_3^{-2}$ anion, originating from the nearly total dissociation of the salt, is hydrolised according to :

$$CO_3^{-2} + H_2O \rightarrow HCO_3^- + OH^- \qquad (a)$$

$$HCO_3^- + H_2O \rightarrow H_2CO_3 + OH^- \qquad (b)$$

The degree of hydrolisis of reaction (a) is far greater than that of (b), therefore, basicaly all hydroxyls, and hence the alkalinity, are generated by the first reaction. Consequently, in a solution of sodium carbonate there will be $CO_3^{-2}$ and $HCO_3^-$ ions, to a lesser extent, and $OH^-$, and the precipitates originated by the various cations will depend upon their special affinity to react with one or another of the ions which are present.

The existence of the bicarbonate anion is deleterious, since most bicarbonates are soluble. The concentration of this bicarbonate anion increases when ammonium salts are present, but decreases with the rise in temperature which favours double decomposition and transforms the bicarbonate anion into carbonate according to $2HCO_3^- \rightarrow CO_2 + CO_3^{-2} + H_2O$, thus avoiding the formation of soluble bicarbonates.

Therefore, due to the hydrolisis of the carbonate anion, there are mainly $CO_3^{-2}$ and $OH^-$ ions in solutions of $Na_2CO_3$ at alkaline pH's ($\geq 8.5$), and hence, during leaching, neutral carbonates, basic carbonates, hydroxides or oxides can be precipitated or maintained precipitated, the precipitate depending upon the nature of the cation. Thus, cations considered neutral or scarcely acidic (alkaline earths) will precipitate neutral carbonates; those that have a marked acidic character (they require acidity to remain in solution) such as $Pb^{+2}$, $Cu^{+2}$, $Zn^{+2}$, etc., will precipitate a more or less basic carbonate, and those whose hydroxide is less soluble than the carbonate ($Fe^{+3}$, $Al^{+3}$, $Cr^{+3}$,...), will precipitate the corresponding hydroxide.

After leaching with $Na_2CO_3$ at the indicated pH, temperature and time, a solid - liquid separation is performed, whereby a liquid (LI) and a solid material (S1) are obtained. This liquid L1 contains nearly 90% of the halogens, alkalines and sulfur which were found in the original waelz oxide, and small amounts (at the < 1 ppm level) of heavy metals.

The solid material S1 is washed in a vessel, under stirring, with water, preferably warm (at temperature similar to that of the leaching stage), for a time no shorter than half an hour, and without addition of sodium carbonate in one or several stages. As long as the alkaline leaching step has been properly completed, the pH will remain alkaline (> 8), hence, acid metallic cations such as zinc, lead, cadmium or iron will not go into solution. The elimination of virtually over 95% of the halogens, alkalines and sulfur present in the original waelz oxide, is completed during this washing stage.

Finally, a solid - liquid separation is performed, giving rise to a liquid L2 and to a solid material S2. Liquid L2 is recirculated and taken back to the carbonate leaching step, previously being warmed to the temperature desired for that stage.

The solid S2 obtained is the electrochemical grade zinc oxide-containing material, which can be subsequently physically treated (dried, pelletized, bricketized, etc.) in order to adapt it to the needs of the process for which it is intended. The mass yield for the obtention of purified zinc oxide-containing material from waelz oxide is of approximately 92.5%.

On the other hand, liquid L1 obtained from the carbonate leaching step can give rise to problems in relation to pollution caused by its discharge, depending on the nature of the receiving medium. Because of this, an agent that will precipitate its heavy metals is added to this liquid, such as $Na_2S$ or hydroxyapatite $Ca(OH)_2*3Ca_3(PO_4)_2$, chosen after assessing the different solubility products of the variety of heavy metal compounds involved. Optionally other compounds for precipitating the anions present in liquid Ll, the elimination of which could be desirable, can be added, such as $CaCl_2$ to precipitate fluorides as $CaF_2$, or $BaCl_2$ to precipitate sulfates as $BaSO_4$, etc..

Once the desired cations and anions have been precipitated, a liquid - solid separation is performed, giving rise to a liquid L3, free of heavy metals and, optionally, of anions, which can be easily discharged by virtue of it not being polluting, and on the other hand, a solid S3 is obtained in small amounts, composed by heavy metal sulfates or phosphates (depending upon the chosen flocculant) and, optionally, by salts such as $CaF_2$, $BaSO_4$, etc.

This S3 solid is a material which is easily assimilated by the waelz process.

In summary, the set of individual operations described to this stage result in :

- A purified zinc oxide-containing material of electrochemical grade which may be used in Imperial Smelting or electrolysis processes.
- A residual liquid which, after eliminating the desired heavy metals and anions, can be discharged by virtue of it not being polluting.
- A solid, in small amount, resulting from the heavy metals, and optionally the anions, precipitated from the residual liquid originating from the carbonate leaching step, which may be perfectly incorporated to the waelz process.

Typical characteristics of the purified zinc oxide-containing material are listed in table I.

TABLE I

| Zinc oxide-containing material | | | |
|---|---|---|---|
| Element | Low | High | Typical |
| Zn | 52.00 | 62.00 | 58.50 |
| Pb | 6.00 | 11.00 | 8.50 |
| Cl | - | - | ≤0.15 |
| Cd | 0.20 | 0.55 | 0.40 |
| FeO | 4.00 | 7.00 | 5.50 |
| $SiO_2$ | 0.50 | 1.50 | 1.00 |
| CaO | 0.50 | 1.50 | 1.00 |
| MgO | 0.10 | 0.50 | 0.20 |
| $Al_2O_3$ | 0.10 | 1.00 | 0.25 |
| MnO | 0.10 | 0.50 | 0.25 |
| Cu | 0.20 | 0.60 | 0.40 |
| Sn | 0.05 | 0.25 | 0.10 |

TABLE I   (continued)

| Zinc oxide-containing material | | | |
|---|---|---|---|
| **Element** | **Low** | **High** | **Typical** |
| C | - | - | ≤2.50 |
| F | 0.05 | 0.30 | 0.15 |
| $K_2O$ | - | - | ≤0.15 |
| $Na_2O$ | - | - | ≤0.15 |
| S | - | - | ≤0.15 |

The chemical analyses mentioned in table I may change in certain cases, due to the nature of the raw material intruduced into the waelz process and its influence upon the composition of the waelz oxide used as starting material in this invention.

## PRACTICAL EXAMPLE OF THE INVENTION

Initially, 200 g of waelz oxide were leached with 1 liter of aqueous solution in a 1.5 liter reactor, at a temperature of 70±2 ºC. Solid $Na_2CO_3$ was gradually added to the solution in order to maintain a constant pH of 9.0±0.2, until there was virtually no variation of pH with time. This time depends upon the waelz oxide from which we started, but approximately 30-45 minutes will usually suffice. The solution is stirred by means of a blade impeller at a speed ranging between 150-200 r.p.m.

After vacuum filtration of the aforementioned solution, the resulting solid is introduced again into the reactor together with an extra 1 liter of water, with no $Na_2CO_3$ addition, and kept under stirring for no less than 30 minutes.

Finally this new solution is vacuum filtered, yielding a purified zinc oxide-containing material. The filtrate from this second filtration is reused in the carbonate leaching step, after being warmed to the desired temperature.

On the other hand, $Na_2S$ (35%) is added to the filtrate obtained form the carbonate leaching process, resulting in a precipitate which gives a lightly brown tone to the solution.

These precipitated sulfides have a very slow decanting rate, and are separated by vacuum filtration. The filtrate obtained is a colourless liquid which is free of heavy metals, the solid being composed mainly by heavy metal sulfides.

The data obtained from these assays is comprised in tables II and III.

| Stage | Initial amounts Solid | Liquid | Amount obtained Solid | Liquid | | | Amounts added (g) | |
|---|---|---|---|---|---|---|---|---|
| | m (g) | v (ml) | m (g) | moisture (%) | v(ml) | pH | Na2CO3 | Na2S (35%) |
| Leaching with Na2CO3 | 200 dry waelz oxide | 1000 L2 pH = 8.6 | S1 263 wet 185 dry | 29.7 | L1 920 | 9.1 | 16 | - |
| S1 washing with water | 263 humid S1 | 1000 pH = 7.6 | S2 282 wet 194 dry | 31.2 | L2 920 | 8.6 | - | - |
| Treatment of effluent L1 | - | 1000 L1 pH = 9.1 | S3 1.1 wet 0.75 dry | 31.8 | L3 910 | 9.2 | - | 1.4 |

Na₂CO₃ consumption: 80 g per Kg of waelz oxide leached.

Na₂S (pure) consumption : 2.5 g per Kg of waelz oxide leached.

Table II. Initial amounts, added amounts and obtained amounts of the various solids and liquids, during the different stages of the process.

Table 3 :

| | | | Leaching with $Na_2CO_3$ | | Washing of S1 with water | | Treatment of effluent L1 | |
|---|---|---|---|---|---|---|---|---|
| Elements | Initial waelz oxide (%) | Initial industrial water mg/L | S1 Solid (%) | L1 Liquid (mg/L) | S2 Solid (%) | L2 Liquid (mg/L) | S3 Solid (%) | L3 Liquid (mg/L) |
| Zn | 54.20 | <0.05 | 57.6 | 0.5 | 57.6 | <0.1 | * | 0.13 |
| Pb | 8.10 | <0.1 | 8.61 | <0.1 | 8.61 | <0.1 | * | <0.1 |
| Cd | 0.16 | <0.05 | 0.16 | 0.94 | 0.16 | <0.05 | * | <0.05 |
| Total C | 1.44 | N.A | 2.22 | N.A. | 2.22 | N.A. | | N.A. |
| Na | 0.61 | 40 | 0.33 | 7200 | 0.10 | 400 | | 7300 |
| K | 1.67 | 4 | 0.24 | 2800 | 0.08 | 350 | | 2850 |
| Cl | 4.25 | 28 | 0.35 | 8100 | 0.05 | 700 | * | 8200 |
| F | 0.25 | 0.75 | 0.12 | 280 | 0.10 | 50 | | 290 |
| S | 1.10 | 14 | 0.17 | 1800 | 0.07 | 250 | * | 1900 |

(*) Detected qualitatively but not quantified.

## DESCRIPTION OF THE DRAWINGS

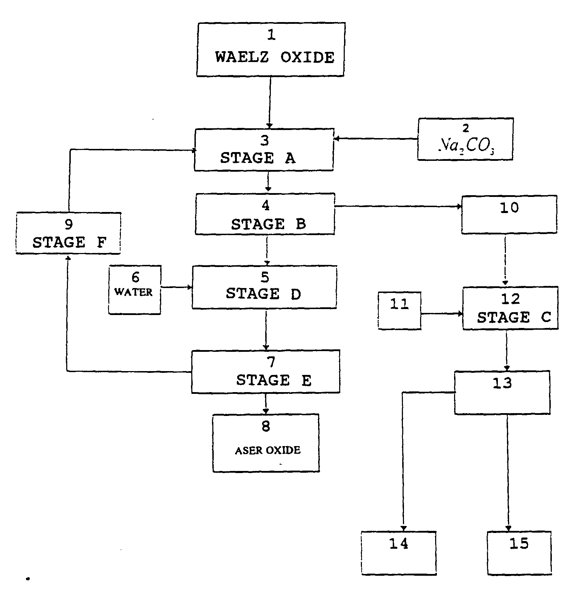

Figure 1 enclosed shows an outline of the process of the invention. It is important to point out that the following boxes represent :

1. Waelz oxides
2. Sodium carbonate
3. Sodium leaching at controlled pH and temperature.
4. Solid - liquid (S/L) separation.
5. Washing with water.
6. Water
7. Solid - liquid (S/L) separation.
8. Purified zinc oxide-containing material.
9. Heating of the liquid.
10. Sodium leaching effluent.
11. Sodium sulfide and, optionally, other precipitants.
12. Heavy metal precipitation and, optionally, of undesired anions.
13. Solid - liquid (S/L) separation.
14. Precipitated solids : metallic sulfides and, optionally, other precipitated compounds of undesired anions.
15. Treated effluent. Discharge.

## Claims

1. A process for the hydrometallurgic purification treatment of a zinc oxide-containing material, which comprises leaching said zinc oxide-containing material with an aqueous solution of sodium carbonate, characterized by the following stages:

a) leaching said zinc oxide-containing material with sodium carbonate in a warm alkaline aqueous medium until a constant pH between 8.0 and 10.0 is achieved without the addition of any extra sodium carbonate, in order to solubilize the contaminants found in said zinc oxide-containing material;

b) solid-liquid separation of the solution resulting from stage a) into a solid (S1) material and a liquid (L1) material containing said contaminants;

c) washing with water of said solid (S1) material in order to reduce the amount of salts contained therein;

d) solid-liquid separation of the solution resulting from stage c) in order to obtain a solid (S2) material containing the purified zinc oxide-containing material and a second liquid (L2) material; and

e) warming of said second liquid (L2) material for its reutilization in stage a),

resulting in the production of a purified zinc-oxide containing material of improved electro-chemical grade, suitable for use in Imperial Smelting furnaces and in electrochemical processes.

2. Process according to claim 1, characterized in that said zinc oxide-containing material is a waelz oxide.

3. Process according to claim 1, characterized in that the consumption of solid sodium carbonate is comprised between 60 and 140 g/kg of the starting zinc-oxide containing material.

4. Process according to claim 1, characterized in that the temperature of the leaching step of stage a) is between 50°C and 90°C.

5. Process according to claim 1, characterized in that the holding time of the leaching step of stage a) is between 20 minutes and 4 hours.

6. Process according to claim 1, characterized in that the solid-liquid ratio of the leaching step of stage a) is between 100 and 500 grams of said zinc oxide-containing material per liter of solution.

7. Process according to claim 1, characterized in that the pH of the washing step of stage c) is between 8.0 and 10.0.

8. Process according to claim 1, characterized in that the temperature of the washing step of stage c) is between 10°C and 90°C.

9. Process according to claim 1, characterized in that the holding time of the washing step of stage c) is between 10 minutes and 2 hours.

10. Process according to claim 1, characterized in that the solid (S1) material-liquid ratio of the washing step of stage c) is between 100 and 500 grams of the solid (S1) material per liter of water.


**Patentansprüche**

1. Verfahren für die hydrometallurgische Reinigungsbehandlung eines Materials mit einem bestimmten Gehalt an Zinkoxyd, das das Waschen des genannten Materials mit einem bestimmten Gehalt an Zinkoxyd mit einer wässrigen Lösung aus Natriumkarbonat einschliesst, gekennzeichnet durch folgende Stufen:

a) das Waschen des genannten Materials mit einem bestimmten Gehalt an Zinkoxyd mit Natriumkarbonat in einem wässrigen, alkalischen, warmen Mittel, das einen konstanten pH-Wert von 8,0 bis 10,0 aufweist, ohne Zusatz einer zusätzlichen Menge an Natriumkarbonat, um die in dem genannten Material mit einem bestimmten Gehalt an Zinkoxyd befindlichen Schadstoffe zu lösen;

b) Dekantation des festen Inhalts und des flüssigen Inhalts der aus der Stufe a) erhaltenen Lösung in festes Material (S1) und flüssiges Material (L1), das die genannten Schadstoffe enthält;

c) Waschen des genannten festen Materials (S1) mit Wasser, um die darin enthaltenen Salze zu reduzieren;

d) Dekantation des festen Inhalts und des flüssigen Inhalts der aus der Stufe c) erhaltenen Lösung, um das feste Material (S2) zu erhalten, das das gereinigte, Zinkoxyd enthaltende Material enthält und ein zweites flüssiges Material (L2) ; und

e) Erhitzung des genannten zweiten flüssigen Materials (L2) für die Wiederverwendung in der Stufe a),

wonach ein gereinigtes Material erhalten wird, mit einem bestimmten Gehalt an Zinkoxyd, mit einer elektrochemisch verbesserten Qualität, das geeignet ist, um in Schmelzöfen vom Typ 'Imperial' und in elektrochemischen Prozessen verwendet zu werden.

2. Verfahren nach Anspruch 1, dadurch gekennzeichnet, dass es sich bei dem Material mit einem bestimmten Gehalt an Zinkoxyd um Wälzoxyd handelt.

3. Verfahren nach Anspruch 1, dadurch gekennzeichnet, dass der Verbrauch an festem Natriumkarbonat zwischen 60 und 140 g/kg des Ausgangsmaterials mit einem bestimmten Gehalt an Zinkoxyd liegt.

4. Verfahren nach Anspruch 1, dadurch gekennzeichnet, dass die Betriebstemperatur beim Waschen der Stufe a) zwischen 50°C und 90°C liegt.

5. Verfahren nach Anspruch 1, dadurch gekennzeichnet, dass die für den Waschvorgang der Stufe a) notwendige Zeit zwischen 20 Minuten und 4 Stunden liegt.

6. Verfahren nach Anspruch 1, dadurch gekennzeichnet, dass das Verhältnis von festem Material und flüssigem Material aus dem Waschvorgang in der Stufe a) zwischen 100 und 500 Gramm des genannten Materials mit einem bestimmten Gehalt an Zinkoxyd pro Liter Lösung liegt.

7. Verfahren nach Anspruch 1, dadurch gekennzeichnet, dass der pH-Wert beim Waschvorgang der Stufe c) zwischen 8,0 und 10,0 liegt.

8. Verfahren nach Anspruch 1, dadurch gekennzeichnet, dass die Temperatur des Waschvorgangs der Stufe c) zwischen 10°C und 90°C liegt.

9. Verfahren nach Anspruch 1, dadurch gekennzeichnet, dass die für den Waschvorgang der Stufe c) notwendige Zeit zwischen 10 Minuten und 2 Stunden liegt.

10. Verfahren nach Anspruch 1, dadurch gekennzeichnet, dass das Verhältnis von festem Material (S1) und der Flüssigkeit aus dem Waschvorgang in der Stufe c) zwischen 100 und 500 Gramm des festen Materials (S1) pro Liter Wasser liegt.

## Revendications

1. Un procédé de traitement de purification hydrométallurgique d'une matière contenant de l'oxyde de zinc, qui comprend l'infiltration de ladite matière contenant de l'oxyde de zinc par une solution aqueuse de carbonate de sodium, caractérisé par les étapes suivantes:

a) Infiltrer ladite matière contenant de l'oxyde de zinc avec du carbonate de sodium dans un milieu aqueux alcalin et chaud jusqu'à parvenir a un pH constant compris entre 8.0 et 10.0 sans addition supplémentaire de carbonate de sodium, afin de solubiliser les élements contaminants qui se trouvent dans ladite matière contenant de l'oxyde de zinc;

b) La séparation solide-liquide de la solution résultant de l'étape a) en une matière solide (S1) et une matière liquide (S2) contenant lesdits élements contaminants;

c) Laver ladite matière solide (S1) avec de l'eau afin de réduire les quantités de sels contenus en elle,

d) La séparation solide-liquide de la solution résultant de l'étape c) afin d'obtenir une matière solide (S2) qui contient la substance contenant de l'oxyde de zinc purifiée et une seconde matière liquide (L2); et

e) Réchauffer ladite seconde matière liquide (L2) pour sa ré-utilisation dans l'étape a),

résultant en la production d'une matière contenant de l'oxyde de zinc purifiée d'un degré électrochimique amélioré, appropriée pour son utilisation dans des fourneaux Impériaux de Fonderie et procédés électrochimiques.

2. Un procédé en accord avec la revendication 1, caractérisé parceque ladite matière contenant de l'oxyde de zinc est un oxyde waelz.

3. Un procédé en accord avec la revendication 1, caractérisé parceque la consommation en carbonate de sodium solide est comprise entre 60 et 140 g/kg de la matière contenant de l'oxyde de zinc de départ.

4. Un procédé en accord avec la revendication 1, caractérisé parceque la température de la phase d'infiltration de l'étape a) est entre 50°C et 90°C.

5. Un procédé en accord avec la revendication 1, caractérisé parceque le temps fixé de la phase d'infiltration de l'étape a) est entre 20 minutes et 4 heures.

6. Un procédé en accord avec la revendication 1, caractérisé parceque la proportion entre solide et liquide de la phase d'infiltration de l'étape a) est entre 100 et 500 grammes de ladite matière contenant de l'oxyde de zinc par litre de solution.

7. Un procédé en accord avec la revendication 1, caractérisé parceque le pH de la phase de lavage de l'étape c) est entre 8.0 et 10.0.

8. Un procédé en accord avec la revendication 1, caractérisé parceque la température de la phase de lavage de l'étape c) est entre 10°C et 90°C.

9. Un procédé en accord avec la revendication 1, caractérisé parceque le temps fixé de la phase de lavage de l'étape c) est entre 10 minutes et 2 heures.

10. Un procédé en accord avec la revendication 1, caractérisé parceque la proportion entre la substance solide (S1) et le liquide de la phase de lavage de l'étape c) est entre 100 et 500 grammes de la matière solide (S1) par litre d'eau.

| | |
|---|---|
| **1**<br>**WAELZ OXIDE** | |

| | | |
|---|---|---|
| **3**<br>**STAGE A** | ← | **2**<br>$Na_2CO_3$ |

| **9**<br>**STAGE F** | | **4**<br>**STAGE B** | → | **10** |
|---|---|---|---|---|

| **6**<br>WATER | → | **5**<br>**STAGE D** |
|---|---|---|

| **11** | → | **12**<br>**STAGE C** |
|---|---|---|

| **7**<br>**STAGE E** |
|---|

| **13** |
|---|

| **8**<br>ASER OXIDE |
|---|

| **14** | | **15** |
|---|---|---|